(19) Europäisches Patentamt
European Patent Office
Office européen des brevets

(11) EP 2 123 718 B1

(12) # EUROPEAN PATENT SPECIFICATION

(45) Date of publication and mention of the grant of the patent:
**19.10.2016 Bulletin 2016/42**

(21) Application number: **08722155.2**

(22) Date of filing: **14.03.2008**

(51) Int Cl.:
***C08L 81/02*** (2006.01) ***B29C 61/06*** (2006.01)
***C08K 5/00*** (2006.01) ***H01G 9/08*** (2006.01)
***B29K 81/00*** (2006.01) ***B29L 23/00*** (2006.01)
***H01B 17/58*** (2006.01) ***H01M 2/02*** (2006.01)
***H01B 7/295*** (2006.01)

(86) International application number:
**PCT/JP2008/054759**

(87) International publication number:
**WO 2008/114731 (25.09.2008 Gazette 2008/39)**

(54) **RESIN COMPOSITION USED FOR HEAT SHRINKABLE MEMBER, HEAT SHRINKABLE TUBE COMPOSED OF THE RESIN COMPOSITION, AND MEMBER COVERED WITH THE TUBE**

HARZZUSAMMENSETZUNG FÜR WÄRMESCHRUMPFBARES ELEMENT, WÄRMESCHRUMPFBARER SCHLAUCH AUS DER HARZZUSAMMENSETZUNG UND MIT DEM SCHLAUCH BEDECKTES ELEMENT

COMPOSITION DE RÉSINE UTILISÉE POUR UN ÉLÉMENT THERMORÉTRÉCISSABLE, TUBE THERMORÉTRÉCISSABLE COMPOSÉ DE LA COMPOSITION DE RÉSINE ET ÉLÉMENT RECOUVERT PAR LE TUBE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.03.2007 JP 2007067342**

(43) Date of publication of application:
**25.11.2009 Bulletin 2009/48**

(73) Proprietor: **Mitsubishi Plastics, Inc.**
**Tokyo 100-8252 (JP)**

(72) Inventors:
- **KITAJIMA, Asami**
  **Nagahama-shi**
  **Shiga 526-8660 (JP)**
- **YAMASHITA, Motoi**
  **Nagahama-shi**
  **Shiga 526-8660 (JP)**
- **HIRUMA, Takashi**
  **Nagahama-shi**
  **Shiga 526-8660 (JP)**
- **FUJITA, Hirotsugu**
  **Nagahama-shi**
  **Shiga 526-8660 (JP)**
- **TAKAGI, Jun**
  **Nagahama-shi**
  **Shiga 526-8660 (JP)**

(74) Representative: **Beck Greener**
**Fulwood House**
**12 Fulwood Place**
**London WC1V 6HR (GB)**

(56) References cited:
**WO-A1-02/062896**
**JP-A- 09 157 402**
**JP-A- 11 140 315**
**JP-A- H02 215 861**
**JP-A- H09 157 402**
**JP-A- 2001 015 874**
**JP-A- 2001 015 874**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 123 718 B1

## Description

### Technical Field

The present invention relates to a heat-shrinkable tube comprised of a resin composition, and a member covered by the tube. More particularly, the invention makes use of a resin composition which exhibits excellent shrinkage property at low temperature when formed into a heat-shrinkable member and which is suitably used for a heat-shrinkable member for covering electronic parts, e.g. particularly capacitor like aluminum electrolysis capacitor as well as primary battery and secondary battery.

### Background Art

Conventionally, as electric insulating materials used for coating capacitors and so on, polyvinyl chloride and polyethylene terephthalate have been widely used. In recent years, electronic parts like capacitor becomes highly densified due to the demand of lighter and more compact parts; meanwhile, fields of parts like auto electronic components which are exposed to a high-operating temperature is also rapidly expanding. In these fields, various products, which are covered by the heat-shrinkable member mainly for the purpose of electrical insulating property, have been developed.

A heat-shrinkable member composed of polyvinyl chloride shows excellent flame retardancy; however, thermal resistance is insufficient and it tends to cause an environmental issues due to its waste disposal, which is problematic. Whereas, the heat-shrinkable member composed of polyester resin such as polyethylene terephthalate exhibits excellent thermal resistance; however, flame retardancy is not sufficient. From the above points, when a heat-shrinkable member is used as the electrical insulation material, a heat-shrinkable member which satisfies flame retardancy and thermal resistance at the same time is demanded.

Conventionally, polyphenylene sulfide resin has been known as a material which satisfies both flame retardancy and thermal resistance at the same time. The polyphenylene sulfide resin is an excellent material which satisfies properties not only flame retardancy and thermal resistance but also electric properties, chemical resistance, electrolyte resistance, and so on. A heat-shrinkable tube using polyphenylene sulfide resin by focusing on these properties is known (See Patent document 1.). However, the tube obtained by the method of Patent document 1 cannot respond to the recent circumstances such that, for the purpose to improve productivity, speed for covering tube on capacitor, for example, tends to become faster and heating required for covering tends to be carried out at high temperature and within a short time.
Patent Document 1: Japanese Patent Application Laid-Open (JP-A) No. 09-157402

### Disclosure of the Invention

### Problems to be solved by the Invention

Accordingly, an object of the present invention is to provide a heat-shrinkable tube comprising a resin composition which exhibits excellent shrinkage property at low temperature and which satisfies properties required for the heat-shrinkable members such as flame retardancy, thermal resistance, electric properties, chemical resistance, and electrolyte resistance.

Another object of the present invention is to provide a member covered by the tube and such a member used for electronic parts.

### Means for Solving the Problems

In order to solve the above problems, the present inventors had been seriously studied about the polyphenylene sulfide resin. As a result, the inventors had discovered a resin composition which can be used for a heat-shrinkable member, wherein the composition satisfies various properties required for a heat-shrinkable member such as flame retardancy and thermal resistance and also exhibits excellent shrinkage property at low temperature; then, the present invention was completed.

In other words, the object of the present invention can be attained by a heat-shrinkable tube, which is constituted by a resin composition wherein the resin composition comprises: at least one plasticizer; and a polyphenylene sulfide resin (a), and the resin composition has at least one tan$\delta$ peak of the resin composition existing within the temperature range between 65 and 95 degree C as measured by dynamic viscoelasticity at an oscillation frequency of 10 Hz, a strain of 0.1%, and a temperature increase rate of 3 degree C/min.

In the resin composition, at least one plasticizer is preferably a flame-retardant plasticizer or a phosphorus-based plasticizer.

In the resin composition, content rate of at least one plasticizer, to the total mass of the resin composition, is

desirably 0.5 mass % or more and 15 mass % or less.

The resin composition can further contain a resin (b) other than the polyphenylene sulfide resin (a) and/or the thermoplastic elastomer (c) such that content rate of the resin (b) and/or the thermoplastic elastomer (c), to the total mass of the resin composition, is 0.1 mass % or more and 35 mass % or less.

Another object of the present invention can be attained by a member covered by the heat-shrinkable tube, and by such members used for electronic devices or electric appliances.

The tube of the invention is preferably formed such that the shrinkage ratio in the longitudinal direction is 2% or more and 20% or less and shrinkage ratio in the diameter direction is 10% or more and 60% or less as measured after immersing the tube in hot water of 90 degree C for 5 seconds; the tube is more preferably formed such that the shrinkage ratio in the longitudinal direction is 15% or less and shrinkage ratio in the diameter direction is 10% or more and 60% or less as measured after immersing the tube in hot water of 80 degree C for 5 seconds.

Effects of the Invention

According to the present invention, it is capable of providing a heat-shrinkable member which exhibits excellent shrinkage property at low temperature and which satisfies properties required for the heat-shrinkable member such as flame retardancy, thermal resistance, electric properties, chemical resistance, and electrolyte resistance. Therefore, as an alternative member to the conventional vinyl chloride-based heat-shrinkable member and polyester-based heat-shrinkable member, the present invention is useful for covering member of electronic parts such as capacitor, primary battery, and secondary battery or for covering member of electric appliances such as steel tube (pipe) or motor coil-end, and trans.

Best Mode for Carrying Out the Invention

Hereinafter, the resin composition, the heat-shrinkable tube, and the member covered by the heat-shrinkable tube of the invention will be described in detail.

[The resin composition]

The resin composition includes: at least one plasticizer; and a polyphenylene sulfide resin (a), at least one tanδ peak existing within the temperature range between 65 and 95 degree C as measured by dynamic viscoelasticity at an oscillation frequency of 10 Hz, a strain of 0.1%, and a temperature increase rate of 3 degree C/min.

< Thermoplastic polyphenylene sulfide resin (a) >

The thermoplastic polyphenylene sulfide resin (a) used in the present invention is a resin in which repeating unit of the polyphenylene sulfide of the following formula (1) (hereinafter, refer to as "PPS".) is contained at an amount of 70 mol % or more, preferably 80 mol % or more. When the below-described repeating unit of the PPS resin is 70 mol % or more, decrease of both crystallization and temperature of thermal transformation of the polymer can be inhibited; various properties like flame retardancy, chemical resistance, and electric properties, which are the characteristics of the resin composition containing PPS resin as the main component, can also be inhibited.

(Formula 1)

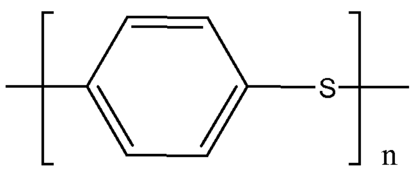

(1)

About the above PPS resin (a), copolymerizable other units having sulfide bond may be included under the condition where the content is below 30 mol %, preferably below 20 mol %. Examples of copolymerizable other repeating unit include: aryl unit, biphenyl unit, terphenylene unit, vinylene unit, carbonate unit, and so on, each of these having a substituent such as a meta-bond unit, an ortho-bond unit, a trifunctional unit, an ether unit, a ketone unit, a sulfone unit, and an alkyl group. These units may be used alone or may be used in combination of two or more thereof. In this respect, these structural units may be any of copolymerization types, like random type or block type.

The above PPS resin (a) is, but not restricted to, preferably a linear polymer having a molecular mass of 50,000 or more; it may be a branched polymer or a partly-crosslinked polymer.

The PPS resin (a) may contain a low-molecular-mass oligomer. In this respect, content rate of the low-molecular-mass oligomer is preferably about 1.5 mass % or less in view of resistance to thermal deterioration and mechanical strength. Molecular mass of the low-molecular-mass oligomer is 100 or more and 2,000 or less, the low-molecular-mass oligomer contained in the PPS resin can be removed by washing with solvent such as diphenyl ether.

Melt viscosity of the PPS resin (a) is not specifically restricted as long as a heat-shrinkable member which satisfies predetermined properties can be obtained; the apparent viscosity as measured at 300 degree C, a shear rate of 100 $sec^{-1}$, an orifice L/D = 10/1 (mm), is 100 Pa·s or more, preferably 200 Pa·s or more, more preferably 400 Pa·s or more, and 10,000 Pa· s or less, preferably 5,000 Pa·s or less, more preferably 2,000 Pa·s or less. When the apparent viscosity is 100 Pa·s or more, film making can be performed; on the other hand, when the apparent viscosity is 10,000 Pa·s or less, it is capable of lower the load to the extruder during extrusion.

The method for manufacturing the PPS resin (a) may be any kind of known methods so that it is not specifically limited. An example of generally used method is a method by reacting a dihalogenated aromatic compound such as p-dichloro benzene and a sodium salt such as sodium sulfide in an aprotic organic solvent like N-methyl-2-pyrrolidone (hereinafter, refer to as "NMP".). So as to adjusting degree of polymerization, by adding polymerization aid like caustic alkali or alkali metal salt of carboxylic acid, the reaction is preferably carried out at a temperature between 230 and 280 degree C. Pressure in the polymerization system and polymerization duration is adequately determined depending on desired degree of polymerization as well as types and amount of polymerization aid to be used.

Nevertheless, by the above method, sodium halide is produced as a by-product; since the sodium halide is not dissolved with a solvent like NMP, it is incorporated in the resin. Hence, the sodium halide in the PPS resin cannot be sufficiently removed even if the PPS resin is washed after polymerization by a large quantity of water. So, alternatively, a method of polymerization can be carried out by using lithium salt instead sodium salt.

< Plasticizer >

The resin composition used in the present invention contains at least one plasticizer. Examples of plasticizer used in the invention include: various known plasticizers such as a phthalic acid ester-based plasticizer, a tetrahydrophthalic acid ester-based plasticizer, a trimellitic acid ester-based plasticizer, an adipic acid ester-based plasticizer, a sebacic acid ester-based plasticizer, a phosphate ester-based plasticizer, a citric acid ester-based plasticizer, a polyester-based plasticizer, an epoxy-based plasticizer, lactam-based plasticizer, a sulfonamide-based plasticizer, a glycolic acid-based plasticizer, a paraffinic mineral oil, a naphthenic mineral oil, a polyolefin, and a polysiloxane. Among them, flame-retardant plasticizer including the phosphate ester-based plasticizer is preferable because it does not impair flame retardancy as a characteristic of the PPS resin (a). When considering the extrusion temperature, i.e. between 280 and 320 degree C, of the PPS resin (a), a plasticizer whose boiling point and decomposition temperature is 400 degree C or more is preferable. Preferable examples of phosphate ester-based plasticizer include: triphenyl phosphate, tricresyl phosphate, and trixylenyl phosphate. By using these plasticizers, it is capable of lowering glass-transition temperature of the resin without impairing excellent flame retardancy of the PPS resin (a) ; thereby shrinkage property at low temperature can be imparted to the resin.

The content rate of at least one plasticizer to the total mass of the resin composition is 0.5 mass % or more, preferably 1 mass % or more, more preferably 3 mass % or more, and it is 15 mass % or less, preferably 10 mass % or less, more preferably 7 mass % or less. When the content rate of plasticizer is 0.5 mass % or more, not only plasticizing effect can be obtained but also shrinkage property at low temperature and effect for inhibiting whitening of ruck can be obtained. On the other hand, when the content rate is 15 mass % or less, melt viscosity is not excessively reduced so that degrade of thickness accuracy can be inhibited.

< The resin (b) other than PPS resin and the elastomer (c) >

The resin composition may be composed of PPS resin (a) alone, or may be composed by blending the other resins (b) and the elastomer (c), etc. and alloying thereof. Examples of the other resins (b) for the use of blending and alloying include: polyester, liquid-crystal polymer, polyamide, polycarbonate, polyolefin, polystyrene, ABS resin, imide-modified ABS resin, AES resin, polyphenylene ether, a copolymer and/or mixture of polyphenylene ether and polystyrene, polyimide, polyamide-imide, polyarylate, polyether imide, polyether ether ketone, polyether sulfone, and polysulfone. By blending and alloying with these resins, effects like enhancing adhesiveness between different members (e.g. PPS resin (a) and ink) can be obtained.

On the other hand, examples of the elastomer (c) include: polyester-based, polyamide-based, polyurethane-based, and olefin-based copolymer; thermoplastic elastomers such as polystyrene-based elastomer; nitrile-based rubber; and acrylic rubber. Specifically, there may be: butadiene copolymer, styrene-isoprene copolymer, butadiene-styrene

copolymer (copolymer of each random, block, and graft), isoprene copolymer, chlorobutadiene copolymer, butadiene-acrylonitrile copolymer, isobutylene copolymer, isobutylene-butadiene copolymer, isobutylene-isoprene copolymer, ethylene-propylene copolymer, and ethylene-propylene-diene copolymer. Moreover, partly-modified rubber component can be used; for example, partially hydrogenated styrene-butadiene block copolymer, and partially-hydrogenated styrene-isoprene block copolymer. By blending and alloying the PPS resin (a) and these elastomers (c), it is capable of enhancing impact strength and the like of the resin composition.

Content rate of the other resins (b) and/or the elastomer (c) these of which are mixed with the PPS resin (a), to the total mass of the resin composition, is desirably 0.1 mass % or more, preferably 1 mass % or more, more preferably 5 mass % or more, 35 mass % or less, preferably 20 mass % or less, more preferably 15 mass % or less. When content rate of the other resins (b) and/or the elastomer (c) these of which are mixed with the PPS resin (a) is too low, the additive effect cannot be expected; when content rate thereof is too high, characteristics of the PPS resin (a) like flame retardancy are possibly deteriorated.

To the resin composition , in order to improve slidability of the heat-shrinkable member, organic lubricant, inorganic lubricant, and inorganic filler can be added; as required, to the degree which does not deteriorate the properties of the invention, auxiliaries such as stabilizer, coloring agent, antioxidant, and ultraviolet absorber can be blended. In addition to these, to the tube of the present invention, corona discharge treatment, flame treatment, printing, embossing, and so on may be applied for various purposes.

< Tanδ peak of the resin composition >

In the resin composition, at least one tanδ peak, which is a ratio of a storage elastic modulus (E') and a loss elastic modulus (E") as measured by dynamic viscoelasticity at an oscillation frequency of 10 Hz, a strain of 0.1%, and a temperature increase rate of 3 degree C/min, exists within the temperature range between 65 and 95 degree C. When the tanδ peak exists within the above range, the resin composition attains shrinkage property at low temperature when it is formed into a heat-shrinkable member; accordingly, it can be suitably used, for example, for a heat-shrinkable tube for covering material of capacitor and battery. If temperature of tanδ peak position becomes below 65 degree C or over 95 degree C, thickness accuracy tends to be deteriorated in the stretching process of the method for manufacturing the heat-shrinkable member. Setting the tanδ-peak existing temperature range to the above range is possible by adequately adjusting the amount of plasticizers and a combination of resins to be used. For instance, the shift of tanδ peak position to a low-temperature side (side of 65 degree C) can be attained by increasing additive amount of plasticizer; on the other hand, the shift of tanδ peak position to a high-temperature side (side of 95 degree C) can be attained by reducing additive amount of plasticizer. Alternatively, in the case where temperature of tanδ peak position of the resin composition is adjusted by addition of the other resins (b) and/or the elastomer (c), tanδ peak can be shifted to a high-temperature side by adding a resin having tanδ peak within a higher temperature range than the temperature of tanδ peak of the PPS resin (a) itself; tanδ peak can be shifted to a low-temperature side by adding a resin having tanδ peak within a lower temperature range than the temperature of tanδ peak of the PPS resin (a) itself.

After forming the resin composition into a heat-shrinkable member, the tanδ peak can be measured by using viscoelastic spectrometer (type: DVA-200) produced by IT Measurement Co., Ltd. under conditions at an oscillation frequency of 10 Hz, a strain of 0.1%, a measurement temperature range between -50 and 300 degree C, and a temperature increase rate of 3 degree C/min.

< Method for manufacturing the resin composition >

The resin composition can be produced by using conventional known manufacturing methods. For example, there may be a method having the steps of: preliminarily adding a plasticizer and the PPS resin (a), the other resins (b) and/or the elastomer (c), and optionally other additives as required; feeding the obtained mixture into a conventional melt-mixing machine such as a monoaxial or a biaxial extruder, a tumbler, a V-blender, a Banbury mixer, a kneader, and mixing rolls; and then kneading the above mixture at a temperature between 180 and 450 degree C. Alternatively, there is a method by separately feeding each of measured components into the corresponding two or more feed-openings of an extruder. Mixing order of the base materials are not restricted; there are several methods: a method by directly mixing the various plasticizers and additives with the PPS resin (a) to be used and then melt-mixing thereof; a method by firstly preparing a master batch in which various plasticizers and additives are mixed with the PPS resin (a) at a high degree of concentration (typical content is about 50-60 mass %) and mixing the master batch with the PPS resin (a) while adjusting the concentration; a method by melt-mixing a part of the base material using the above method and further melt-mixing the rest of the base material; or a method by mixing a part of the base material in a monoaxial or a biaxial extruder while mixing the rest of the base material using a side feeder. Any of these methods can be used. Moreover, about small-quantity of additive components, after mixing other components by the above methods and so on and palletizing the obtained mixture, the additive can be added before molding to obtain a molded product.

The resin composition exhibits excellent shrinkage property at low temperature, it also shows flame retardancy, thermal resistance, electric properties, chemical resistance, and electrolyte resistance. Therefore, the resin composition can be suitably used, for example, for a heat-shrinkable member such as a heat-shrinkable film, a heat-shrinkable sheet, and a heat-shrinkable tube, particularly the heat-shrinkable tube.

[Heat-shrinkable tube of the present invention]

Next, the heat-shrinkable tube of the present invention will be described as follows.

The heat-shrinkable tube of the invention comprises the resin composition described above. As it were, the tube of the invention comprises the resin composition including at least one plasticizer and the PPS resin (a); whereby the tube having a particular thermal shrinkability exhibits excellent performance as a covering material specifically for capacitor and battery.

About the heat-shrinkable tube of the invention, shrinkage ratio in the longitudinal direction, as measured after immersing the tube in hot water of 90 degree C for 5 seconds, is within the range of 2% or more, preferably 3% or more, more preferably 5% or more, and 20% or less, preferably 15% or less, more preferably 12% or less. Meanwhile, shrinkage ratio in the diameter direction as measured under the same conditions is within the range of 10% or more, preferably 15% or more, more preferably 20% or more, and 60% or less, preferably 50% or less, more preferably 45% or less.

In addition, about the heat-shrinkable tube of the invention, shrinkage ratio in the longitudinal direction, as measured after immersing the tube in hot water of 80 degree C for 5 seconds, is within the range of 15% or less, preferably 12% or less, more preferably 10% or less. Meanwhile, shrinkage ratio in the diameter direction as measured under the same conditions is within the range of 10% or more, preferably 15% or more, more preferably 20% or more, and 60% or less, preferably 50% or less, more preferably 45% or less.

When the shrinkage ratio in the longitudinal direction as measured after immersing the tube in hot water of 90 degree C for 5 seconds is 20% or less, problems like misalignment of covering position due to excessive shrinkage in the longitudinal direction when covering of electric parts as well as lengthening of the cutting length can be inhibited. Moreover, when shrinkage ratio in the diameter direction when immersing the tube in hot water of 90 degree C for 5 seconds is 10% or more, sufficient shrinkage to cover the parts can be obtained. Particularly, the shrinkage ratio in the longitudinal direction as measured after immersing in hot water of 80 degree C for 5 seconds is 15% or less and the shrinkage ratio in the diameter direction as measured under the same condition is 10% or more, shrinkable property at low-temperature can be obtained; thereby the tube can be suitably used for a covering member for electronic devices, electric appliances, these of which are difficult to be treated at high temperature.

Further, about the heat-shrinkable tube, shrinkage ratio in the longitudinal direction, as measured after immersing the tube in boiling water for 5 seconds, is within the range of 30% or less, preferably 25% or less, more preferably 20% or less; shrinkage ratio in the diameter direction as measured under the same conditions is preferably within the range of 20% or more, preferably 25% or more, more preferably 30% or more, and 70% or less, preferably 60% or less, more preferably 50% or less. In view of inhibiting problems of covering position, cutting length and so on, the lower limit of the shrinkage ratio in the longitudinal direction in the boiling water is preferably low, it is desirably about 5%.

When the tube satisfies the above heat-shrinkable properties, preferably a heat-shrinkable property in hot water of 80 degree C, hot water of 90 degree C, and boiling water, cover appearance is favorable and the tube can be shrunk at a low temperature when covering an object. So, it is capable of saving energy cost and of covering by using a conventional covering machine under almost the same covering conditions as that of conventional tubes. It should be noted that the shrinkage ratio is a shrinkage ratio which can be obtained when immersing in boiling water or hot water for 5 seconds. Hitherto, for the similar evaluation, there was a case using a shrinkage ratio as measured after immersing in hot water for 30 seconds. However, when improving the productivity, speed of the step for covering the tube onto the capacitor and so on becomes faster and heating required for covering tends to be performed at a higher temperature within a shorter time; whereby it is difficult to meet the conventional measuring time and actual production step. Therefore, the above condition is provided.

The above heat-shrinkable property can be obtained by adequately adjusting additive amount of plasticizers, temperature for stretching the tube, and so on. For example, increasing shrinkage ratio in the longitudinal direction to the upper limit (20%) side can be attained by raising the ratio between feeding speed of non-elongated tube and nip-roll speed after elongation; decreasing the shrinkage ratio to the lower limit (2%) side can be attained by reducing the ratio between feeding speed of non-elongated tube and nip-roll speed after elongation. On the other hand, increasing the shrinkage ratio in the diameter direction to the upper limit (60%) side can be attained by raising the ratio between diameter of the non-elongated tube and diameter of the elongated tube; decreasing the shrinkage ratio to the lower limit (10%) side can be attained by reducing the ratio between diameter of the non-elongated tube and diameter of the elongated tube.

The method for manufacturing the tube of the present invention will be described as follows. The method for manufacturing the tube of the present invention is not specifically limited; a preferable method may include the steps of:

extruding a non-elongated tube normally by using round dies and then elongating the extruded tube to obtain a seamless heat-shrinkable tube. Apart from this, there are examples like a method by adhering, by fusion-bonding, weld-bonding, or gluing, a film obtained by extrusion using T-dies or I-dies and elongation, or a method by adhering the tube or the film in a spiral form to form a tube.

Here, the method in which a non-elongated tube is extruded by using a round dies and then the extruded tube is elongated to form a heat-shrinkable tube, will be more specifically described. The resin composition is heated by a melt-extruding apparatus up to a temperature of the melting point or more and melted; then, the melted resin is continuously extruded from the round dies and forcibly cooled to form a non-elongated tube. As a method of forcible cooling, there may be a method by immersing in cold water or a method by cooling with cold wind. Among them, the method by immersing in cold water shows high cooling efficiency so that it is advantageous. The obtained non-elongated tube may be continuously provided to the following elongation step or it may be once wound with a roll and then used as the original tube in the elongation step. In view of productivity and thermal efficiency, a method in which the non-elongated tube is continuously provided to the following elongation step is preferable.

The non-elongated tube thus obtained is pressurized by a compressed gas from the inner side of the tube and then it is elongated. Elongation method is not specifically limited; for example, there is a method by applying pressure of the compressed gas from one end of the non-elongated tube and discharging the pressure from the other end at a constant rate, followed by heating the tube by hot water or infrared heater, and then letting the tube into a cooled cylinder for controlling elongation magnification in the diameter direction to complete elongation of fixed magnification. The temperature condition is adjusted such that the tube is elongated at a certain position of the cylinder. The elongated tube cooled in the cylinder is wound as an elongated tube while being held by a pair of nip rolls. Order of the elongation in the longitudinal direction and the diameter direction is not restricted; elongation in these directions is preferably carried out at the same time.

The elongation magnification in the longitudinal direction is determined based on the ratio between the feeding speed of the non-elongated tube and nip-roll speed of the elongated tube; the elongation magnification in the diameter direction is determined based on the ratio between diameter of the non-elongated tube and diameter of the elongated tube. The other pressure elongation method apart from this may be a method by holding both feeding side of non-elongated tube and drawing side of the elongated tube between nip rolls and then keeping the internal pressure of the enclosed compressed gas.

The conditions of elongation are adjusted by properties of the resin composition to be used or the targeted heat-shrinkage ratio, in the tube of the invention, since number of tan$\delta$ peak as measured by dynamic viscoelasticity measurement at an oscillation frequency of 10 Hz, a strain of 0.1%, and a temperature increase rate of 3 degree C/min is at least one within the range of 65 degree C or more and 95 degree C or less, elongation is carried out within a temperature range of glass-transition temperature or more and 100 degree C or less, preferably 65 degree C or more and 95 degree C or less.

The tube of the invention is obtained by preferably elongating a non-elongated tube: in the diameter direction at a magnification of 1.2 times or more, preferably 1.3 times or more, more preferably 1.4 times or more and 3.0 times or less, preferably 2.5 times or less, more preferably 2.0 times or less; and in the longitudinal direction at a magnification of 1.0 time of more, preferably 1.02 times or more and 2.0 times or less, preferably 1.5 times or less, more preferably 1.3 times or less. When the elongation magnification of the tube in the diameter direction is 1.2 times or more, amount of shrinkage sufficient enough to cover the object can be obtained; when the elongation magnification of the tube is 3.0 times or less, not only increasing tendency of unevenness in thickness can be inhibited but also decrease of shrinkage ratio due to the oriented crystallization can be inhibited. On the other hand, when the elongation magnification of the tube in the longitudinal direction is 2.0 times or less, it is not only capable of inhibiting misalignment of the covering position of the electric parts and so on due to the excessive shrinkage in the longitudinal direction but also capable of inhibit increase in cost caused by unnecessary lengthening of the cutting length of the tube.

Thickness of the tube thus obtained is not specifically limited; thickness of the tube generally used for capacitor, depending on rated voltage of the capacitor, is within the range of about 0.05 mm to 1.0 mm, typically within the range of 0.07 mm to 0.2 mm. Moreover, a tube whose width of tube in a folded state (hereinafter, refer to as "folding diameter".) is in the range of 4 mm to 300 mm is preferable as it can be used for covering of general-purpose capacitor and battery as well as overall packaging of general-purpose battery.

The tube of the present invention can be suitably used as a cover material for capacitors such as aluminum electrolytic capacitor; it is also useful for other applications like covering tubes for electric cable (round cable, flat cable), dry-cell battery, secondary battery such as lithium-ion battery, steel pipe or motor coil end, electric appliances like trans or compact motor, or electric bulb, fluorescent tube, and fluorescent tube of facsimile and image scanner.

Examples

The present invention will be more specifically described by way of the following Examples; however, the

invention is not restricted by them. Various measured values and evaluations about the heat-shrinkable tube shown in this description were determined as below.

(1) Tanδ peak temperature

Temperature of tanδ peak is a value obtained by measuring a test piece having a coating of resin composition (100 μm thick, 0.412 cm wide, 2.5 cm in inter-marker distance) in the tube's length direction by using viscoelastic spectrometer (type: DVA-200) produced by IT Measurement Co., Ltd. The measurement was carried out under conditions at an oscillation frequency of 10 Hz, a strain of 0.1%, a measurement temperature range between -50 and 300 degree C, and a temperature increase rate of 3 degree C/min.

(2) Shrinkage ratio of the heat-shrinkable tube

Length and folded diameter of the heat-shrinkable tube before and after immersing for 5 seconds in hot water at 80 degree C and 90 degree C, as well as boiling water were measured and the shrinkage ratio was calculated by the following expressions.

(Shrinkage ratio in the longitudinal direction [%]) = {[(length of tube before immersing) - (length of tube after immersing)]/(length of tube before immersing)} x 100

(Shrinkage ratio in the diameter direction [%]) = {[(folded diameter of tube before immersing) - (folded diameter of tube after immersing)]/(folded diameter of tube before immersing)} x 100

(3) Flame retardancy

Flame retardancy of the heat-shrinkable member obtained by the resin composition was evaluated in accordance with UL224 Optional VW-1 Flame Test adopted as a flame retardancy evaluation.

(4) Thermal resistance

An aluminum electrolytic capacitor having a diameter of 35 mm, length of 59.5 mm was covered by a tube having a folded diameter of 59 mm, a thickness of 0.1 mm, and a length of 73 mm in a circulating hot air shrink oven at 200 degree C for 5 seconds; after aging in the hot air oven at 85 degree C for 60 minutes, the set of the aluminum electrolytic capacitor and the tube was again exposed under an atmosphere in the hot air oven at 200 degree C for 5 minutes. Cracks of the resultant were evaluated based on the following criteria.

○ : no crack occurs (good thermal resistance).
× : cracks occur (bad thermal resistance).

< Materials to be used >

Materials to be used for the Examples of the resin composition, Comparative examples, and Reference examples are shown as follows.

* PPS1: polyphenylene sulfide resin [commodity name: FORTRON 0220C9 manufactured by Polyplastics Co., Ltd.,

apparent viscosity (300 degree C, shear rate of 100 $sec^{-1}$): 510 Pa·s]

* PPS2: polyphenylene sulfide resin [commodity name: FORTRON 0316C1 manufactured by Polyplastics Cho., Ltd.. , apparent viscosity (300 degree C, shear rate of 100 $sec^{-1}$): 330 Pa·s]

* Resin 1: polyamide resin (commodity name: NOVAMID X21 manufactured by Mitsubishi Engineering-Plastics Corporation)

* Resin 2: polycarbonate resin (commodity name: IUPILON S2000 manufactured by Mitsubishi Engineering-Plastics Corporation)

* ESM1: acid modified SEBS resin (commodity name: TUFTEC M1943 manufactured by Asahi Kasei Chemicals Corporation)

* ESM2: modified SEBS resin (commodity name: DYNARON 8630P manufactured by JSR Corporation)

* ESM3: SEPS resin (commodity name: SEPTON 2063 manufactured by Kuraray Co., Ltd.)

* Plasticizer 1: triphenyl phosphate (commodity name: TPP manufactured by Daihachi Chemical Industry Co., Ltd.)

(Examples 1 to 10 and Comparative examples 1 to 4)

A resin composition having contents shown in Table 1 was melted by an extruder whose cylinder temperature was set at 290 degree C and the melted resin was formed into a tube through round dies to obtain a heat-shrinkable polyphenylene sulfide-based tube having a folded diameter of 59 mm and a thickness of 0.1 mm. In the Comparative example 3, properties of the heat-shrinkable tube were evaluated by using a polyethylene terephthalate heat-shrinkable tube (commodity name: HISHI TUBE T22 manufactured by Mitsubishi Plastics, Inc.; a folded diameter of 58 mm, a thickness of 0.11 mm). In the Comparative example 4, properties of the heat-shrinkable tube were evaluated by using a polyvinyl chloride-based heat-shrinkable tube (commodity name: HISHI TUBE GT-51 manufactured by Mitsubishi Plastics, Inc., a folded diameter of 59 mm, a thickness of 0.1 mm). The results are shown in Table 1.

(Table 1)

| | | | Examples | | | | | | | | | | Comparative examples | | | | Reference example |
|---|---|---|---|---|---|---|---|---|---|---|---|---|---|---|---|---|---|
| | | | 1 | 2 | 3 | 4 | 5 | 6 | 7 | 8 | 9 | 10 | 1 | 2 | 3 | 4 | |
| Resin composition | PPS (mass %) | PPS1 | 93 | 85 | 83 | 80 | 79 | 83 | 83 | 75 | 70 | - | 90 | 100 | PET | PVC | 75 |
| | | PPS2 | - | - | - | - | - | - | - | - | - | 85 | - | - | | | - |
| | Otherresins (mass %) | Resin 1 | - | - | - | - | - | - | - | 9 | - | - | - | - | | | - |
| | | Resin 2 | - | - | - | - | - | - | - | - | 14 | - | - | - | | | - |
| | Elastomer (mass %) | ESM1 | - | 10 | 10 | 10 | 14 | - | - | 9 | 9 | 9 | 10 | - | | | 8 |
| | | ESM2 | - | - | - | - | - | 10 | - | - | - | - | - | - | | | - |
| | | ESM3 | - | - | - | - | - | - | 10 | - | - | - | - | - | | | - |
| | Plasticizer (mass %) | PLZ1 | 7 | 5 | 7 | 10 | 7 | 7 | 7 | 7 | 7 | 6 | - | - | | | 17 |
| Elongation magnification | Longitudinal direction | | 1.7 | 1.7 | 1.7 | 1.7 | 1.7 | 1.7 | 1.7 | 1.7 | 1.7 | 1.7 | 1.7 | 1.7 | 1.7 | 1.7 | Film making could not be completed. |
| | Diameter direction | | 1.1 | 1.1 | 1.1 | 1.1 | 1.1 | 1.1 | 1.1 | 1.1 | 1.1 | 1.1 | 1.1 | 1.1 | 1.1 | 1.1 | |
| Tan δ peak temperature (°C) | | | 80 | 87 | 82 | 70 | 80 | 80 | 82 | 78 | 88 | 80 | 100 | 100 | 86 | 78 | |
| Shrinkage ratio (%) | 80°C | Longitudinal direction | 4.5 | 0.5 | 4.5 | 6.0 | 6.5 | 5.5 | 8.7 | 9.8 | 0.5 | 8.5 | 0.0 | 0.2 | 2.3 | 11.2 | |
| | | Diameter direction | 43.8 | 15.7 | 41.8 | 37.4 | 38.4 | 41.1 | 39.3 | 38.2 | 19.5 | 32.6 | 0.1 | 0.3 | 33.3 | 47.3 | |
| | 90°C | Longitudinal direction | 6.0 | 2.8 | 5.5 | 7.7 | 6.8 | 7.2 | 11.5 | 10.7 | 4.5 | 12.2 | 0.5 | 0.3 | 3.7 | 12.0 | |
| | | Diameter direction | 46.9 | 42.9 | 44.9 | 39.8 | 40.2 | 42.7 | 41.0 | 39.9 | 40.9 | 38.3 | 6.4 | 6.7 | 39.1 | 49.4 | |
| | 100°C | Longitudinal direction | 6.3 | 4.5 | 6.3 | 10.3 | 7.8 | 6.8 | 11.5 | 11.5 | 5.7 | 12.5 | 6.5 | 7.8 | 4.3 | 14.0 | |
| | | Diameter direction | 47.5 | 45.3 | 43.1 | 38.9 | 38.9 | 41.6 | 38.7 | 38.8 | 43.1 | 38.5 | 44.0 | 42.9 | 40.1 | 50.1 | |
| Flame retardancy | | | VW-1 | VW-1 | VW-1 | VW-1 | VW-1 | VW-1 | VW-1 | VW-1 | VW-1 | VW-1 | VW-1 | VW-1 | - | VW-1 | |
| Thermal resistance | | | ○ | ○ | ○ | ○ | ○ | ○ | ○ | ○ | ○ | ○ | ○ | ○ | ○ | × | |

(Table 1)

According to Table 1, since the tubes of the present invention (Examples 1 to 10) exhibits thermal resistance and flame retardancy and the tanδ peak thereof exists within the temperature range between 65-95 degree C, it is understood that the heat-shrinkage ratio in both the longitudinal direction and the diameter direction is desirable in hot water of 80 degree C, 90 degree C, and boiling water. Whereas, although the heat-shrinkable tubes which do not contain plasticizer (Comparative examples 1 and 2) show thermal resistance and flame retardancy, heat-shrinkage ratio in hot water of 80 degree C and 90 degree C is low; thereby sufficient low-temperature shrinkable property cannot be obtained. About heat-shrinkable tubes produced by materials other than PPS-based resin (Comparative examples 3 and 4), it is understood that properties, i.e. flame retardancy and thermal resistance cannot be obtained. In addition, in view of Reference example, when adding excessive plasticizer, the tube was ruptured during elongation step so that film making could not be completed.

Accordingly, by using the resin composition , it is capable of providing a heat-shrinkable member (heat-shrinkable tube) which exhibits excellent flame retardancy, thermal resistance, and shrinkage property at low temperature.

Industrial Applicability

The resin composition exhibits excellent shrinkage property at low temperature when forming into a heat-shrinkable member so that it can be suitably used as a heat-shrinkable member for covering electronic parts, particularly capacitor like aluminum electrolytic capacitor, as well as primary battery and secondary battery.

## Claims

1. A heat-shrinkable tube, which is constituted by a resin composition wherein the resin composition comprises: at least one plasticizer; and a polyphenylene sulfide resin (a), and
   the resin composition has at least one tanδ peak of the resin composition existing within the temperature range between 65 and 95 degree C as measured by dynamic viscoelasticity at an oscillation frequency of 10 Hz, a strain of 0.1%, and a temperature increase rate of 3 degree C/min.

2. The heat-shrinkable tube according to claim 1, wherein at least one said plasticizer is a flame-retardant plasticizer.

3. The heat-shrinkable tube according to claim 1, wherein at least one said plasticizer is a phosphorus-based plasticizer.

4. The heat-shrinkable tube according to any one of claims 1 to 3, wherein the content of said at least one plasticizer relative to the total mass of the resin composition is 0.5 mass % or more and 15 mass % or less.

5. The heat-shrinkable tube according to any one of claims 1 to 4, further comprising:

   a resin (b) other than the polyphenylene sulfide resin (a); and/or
   a thermoplastic elastomer (c),
   wherein the total content of the resin (b) and/or the thermoplastic elastomer (c) relative to the total mass of the resin composition is 0.1 mass % or more and 35 mass % or less.

6. The heat-shrinkable tube according to any one of Claims 1 to 5, wherein the shrinkage ratio in the longitudinal direction is 20% or less and the shrinkage ratio in the diameter direction is 10 % or more and 60% or less as measured after immersing the tube in hot water at 90 degree C for 5 seconds.

7. The heat-shrinkable tube according to any one of Claims 1 to 6, wherein the shrinkage ratio in the longitudinal direction is 15% or less and the shrinkage ratio in the diameter direction is 10% or more and 60% or less as measured after immersing the tube in hot water at 80 degree C for 5 seconds.

8. A member, which is covered by the heat-shrinkable tube according to any one of claims 1 to 7.

9. The member according to claim 8, which is used for electronic devices or electric appliances.

## Patentansprüche

1. Wärmeschrumpfender Schlauch, der aus einer Harzzusammensetzung besteht, wobei die Harzzusammensetzung umfasst: wenigstens einen Weichmacher; und ein Polyphenylensulfidharz (a), und die Harzzusammensetzung wenigstens eine tanδ-Spitze der Harzzusammensetzung aufweist, die innerhalb des Temperaturbereichs zwischen 65 und 95 Grad C existiert, wie bei durch dynamische Viskoelastizität bei einer Schwingungsfrequenz von 10 Hz, einem Druck von 0,1 % und einem Temperaturanstieg von 3 Grad C/min gemessen.

2. Wärmeschrumpfender Schlauch nach Anspruch 1, wobei der wenigstens eine Weichmacher ein Flammenschutz-Weichmacher ist.

3. Wärmeschrumpfender Schlauch nach Anspruch 1, wobei der wenigstens eine Weichmacher ein phosphorbasierter Weichmacher ist.

4. Wärmeschrumpfender Schlauch nach einem der Ansprüche 1 bis 3, wobei der Inhalt des wenigstens einen Weichmachers im Verhältnis zur Gesamtmasse der Harzzusammensetzung 0,5 Massen-% oder mehr und 15 Massen-% oder weniger beträgt.

5. Wärmeschrumpfender Schlauch nach einem der Ansprüche 1 bis 4, weiter umfassend:

   ein Harz (b), das ein anderes ist als das Polyphenylensulfidharz (a); und/oder
   ein thermoplastisches Elastomer (c),
   wobei der Gesamtgehalt des Harzes (b) und/oder des thermoplastischen Elastormers (c) im Verhältnis zur Gesamtmasse der Harzzusammensetzung 0,1 Massen-% oder mehr und 35 Massen-% oder weniger beträgt.

6. Wärmeschrumpfender Schlauch nach einem der Ansprüche 1 bis 5, wobei das Schrumpfverhältnis in der Längsrichtung 20 % oder weniger beträgt und das Schrumpfverhältnis in der Durchmesserrichtung 10 % oder mehr beträgt und 60 % oder weniger, als gemessen wurde, nachdem der Schlauch für 5 Sekunden in 90 Grad C heißes Wasser getaucht wurde.

7. Wärmeschrumpfender Schlauch nach einem der Ansprüche 1 bis 6, wobei das Schrumpfverhältnis in der Längsrichtung 15 % oder weniger beträgt und das Schrumpfverhältnis in der Durchmesserrichtung 10 % oder mehr beträgt und 60 % oder weniger, als gemessen wurde, nachdem der Schlauch für 5 Sekunden in 80 Grad C heißes Wasser getaucht wurde.

8. Glied, das mit einem wärmeschrumpfenden Schlauch nach einem der Ansprüche 1 bis 7 überzogen ist.

9. Glied nach Anspruch 8, das für elektronische Vorrichtungen oder elektrische Geräte verwendet wird.

## Revendications

1. Tube thermorétrécissable, qui est constitué par une composition de résine, ladite composition de résine comprenant : au moins un plastifiant ; et une résine de sulfure de polyphénylène (a), et la composition de résine ayant au moins un pic de tanδ de la composition de résine existant dans la plage de températures comprise entre 65 et 95 degrés C tel que mesuré par viscoélasticité dynamique à une fréquence d'oscillation de 10 Hz, une déformation de 0,1 % et une vitesse de chauffage de 3 degrés C/min.

2. Tube thermorétrécissable selon la revendication 1, au moins desdits plastifiants étant un plastifiant ignifuge.

3. Tube thermorétrécissable selon la revendication 1, au moins un desdits plastifiants étant un plastifiant à base de phosphore.

4. Tube thermorétrécissable selon l'une quelconque des revendications 1 à 3, ladite teneur dudit au moins un plastifiant par rapport au poids total de la composition de résine étant supérieure ou égale à 0,5 % en poids et inférieure ou égale à 15 % en poids.

**5.** Tube thermorétrécissable selon l'une quelconque des revendications 1 à 4, comprenant en outre :

une résine (b) différente de la résine de sulfure de polyphénylène (a) ; et/ou
un élastomère thermoplastique (c),
ladite teneur totale de la résine (b) et/ou de l'élastomère thermoplastique (c) par rapport au poids total de la composition de résine étant supérieure ou égale à 0,1 % en poids et inférieure ou égale à 35 % en poids.

**6.** Tube thermorétrécissable selon l'une quelconque des revendications 1 à 5, ledit taux de retrait dans la direction longitudinale étant inférieur ou égal à 20 % et le taux de retrait dans la direction du diamètre étant supérieur ou égal à 10 % et inférieur ou égal à 60 % tels que mesurés après immersion du tube dans de l'eau chaude à 90 degrés C pendant 5 secondes.

**7.** Tube thermorétrécissable selon l'une quelconque des revendications 1 à 6, ledit taux de retrait dans la direction longitudinale étant inférieur ou égal à 15 % et le taux de retrait dans la direction du diamètre étant supérieur ou égal à 10 % ou inférieur ou égal à 60 % tels que mesurés après immersion du tube dans de l'eau chaude à 80 degrés C pendant 5 secondes.

**8.** Elément qui est recouvert par le tube thermorétrécissable selon l'une quelconque des revendications 1 à 7.

**9.** Elément selon la revendication 8, qui est utilisé pour des dispositifs électroniques ou des appareils électriques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9157402 A